# EUROPÄISCHE PATENTSCHRIFT

(11) **EP 2 638 366 B1**
(45) Veröffentlichungstag und Bekanntmachung des Hinweises auf die Patenterteilung: **15.04.2015**
(21) Anmeldenummer: 11770814.9
(22) Anmeldetag: 20.10.2011
(51) Int. Cl.: G01F 1/84, G01N 9/00, G01N 11/16

(54) **MESSWANDLER VOM VIBRATIONSTYP FÜR EIN IN EINEM FLEXIBLEN SCHLAUCH STRÖMENDES FLUID**
VIBRATION TYPE TRANSDUCER FOR A FLUID FLOWING IN A FLEXIBLE TUBE
TRANSDUCTEUR DE MESURE DU TYPE À VIBRATIONS POUR UN FLUIDE COULANT DANS UN TUBE FLEXIBLE

(30) Priorität: 10.11.2010 DE 102010043707
(43) Veröffentlichungstag der Anmeldung: 18.09.2013
(73) Patentinhaber: Endress+Hauser Flowtec AG, 4153 Reinach (CH)
(72) Erfinder: KEITA, Mamadi, CH-4053 Basel (BS) (CH); SIMON, Antoine, F-68300 St. Louis (FR); TOUZIN, Mike, 79585 Höllstein (DE)
(74) Vertreter: Andres, Angelika Maria
(86) Internationale Anmeldenummer: PCT/EP2011/068362
(87) Internationale Veröffentlichungsnummer: WO 2012/062550

(56) Entgegenhaltungen:
- WO-A1-2008/056976
- DE-C1- 4 311 694
- JP-B- 7 015 397

## Beschreibung

Die vorliegende Erfindung betrifft einen Messwandler vom Vibrationstyp für ein in einem flexiblen Schlauch strömendes Fluid. Der Messwandler ist dabei insbesondere zur Verwendung in einem Coriolis-Durchflussmessgerät ausgebildet. Wie aus dem Fachgebiet allgemein bekannt ist, wird in Coriolis-Durchflussmessgeräten das Coriolis-Prinzip ausgenutzt, nach welchem immer dann, wenn sich in einem System eine rotierende und eine, zumindest teilweise senkrecht zu der Rotationsachse verlaufende, geradlinige Massebewegung überlagern, auf die bewegte Masse eine zusätzliche Kraft, die Corioliskraft, wirkt.

Durchflussmessgeräte sind in der Regel als In-Line-Messgeräte ausgebildet, die in eine Rohrleitung, wie beispielsweise in eine Prozessleitung einer industriellen Anlage, einfügbar sind. Solche Durchflussmessgeräte weisen in der Regel mindestens ein Messrohr auf, das im Einsatz von dem in der Rohrleitung strömenden Fluid durchströmt wird. Durch ein Coriolis-Durchflussmessgerät ist dabei mindestens ein Parameter, wie beispielsweise ein Massedurchfluss, eine Dichte, eine Viskosität, etc., des in der Rohrleitung strömenden Fluids bestimmbar.

In manchen Bereichen besteht das Problem, dass das zu messende Fluid zur Ansatzbildung neigt, abrasiv ist und/oder das Material des mindestens einen Messrohres eines Durchflussmessgerätes angreift. Dies führt dazu, dass das Messrohr relativ häufig ausgetauscht werden muss. Bei typischen Coriolis-Durchflussmessgeräten ist dies mit einem relativ hohen Aufwand und mit hohen Kosten verbunden. In einigen Anwendungsbereichen, wie beispielsweise in der Lebensmittelindustrie, besteht ferner die Anforderung, dass die gesamten, mit dem Fluid in Kontakt gelangenden Rohrleitungen, und damit auch das mindestens eine Messrohr eines eingesetzten Durchflussmessgerätes, nach einer gewissen Betriebsdauer und/oder bei einem Wechsel des strömenden Fluids, gereinigt werden müssen. Dies ist bei Messrohren von Durchflussmessgeräten, insbesondere bei Messrohren von Coriolis-Durchflussmessgeräten, aufwändig und mit relativ hohen Kosten verbunden. Weiterhin besteht in einigen Anwendungsbereichen, wie beispielsweise in medizinischen Anwendungsbereichen, die Anforderung, dass die jeweiligen Fluid-Leitungen, deren Durchfluss bestimmt werden soll, nicht unterbrochen werden dürfen. Ein Beispiel solch einer Fluid-Leitung ist ein Infusionsschlauch, der in der Regel aus einem flexiblen Kunststoffschlauch gebildet wird.

Aus der Druckschrift DE 10 2008 002 215 A1 ist ein Coriolis-Durchflussmessgerät bekannt, bei welchem eine Führungseinheit, durch die das zu messende Fluid strömt, abnehmbar an einer Trageeinheit angebracht ist. Die Führungseinheit und die Trageeinheit sind mechanisch aneinander gekoppelt. Die Trageeinheit wird im Einsatz zu mechanischen Schwingungen angeregt und die mechanischen Schwingungen der Trageeinheit werden durch mindestens einen Schwingungs-Sensor erfasst. Der in der DE 10 2008 002 215 A1 beschriebene Aufbau eignet sich insbesondere für die Durchflussmessung von gravitationsgeförderten Feststoffen (z.B. Schüttgut).

Aus der Druckschrift DE 43 11 694 C1 ist ein Massedurchflussmesser nach dem Coriolisprinzip bekannt, der einen weichen, im Wesentlichen keine Rückstellkräfte aufweisenden Schlauch aufweist, der kraftschlüssig mit einem vorgegebenen Bahnverlauf auf einer starren Schlauchaufnahme festlegbar ist. Die Schlauchaufnahme ist wiederum auf einem Schwingsystem für eine Bewegung zusammen mit diesem um eine erste Achse befestigt. Ferner ist die Schlauchaufnahme gegenüber dem Schwingsystem um eine zweite Achse derart drehbar gehaltert, dass die Schlauchaufnahme eine durch die Corioliskräfte der in dem Schlauch strömenden Masse hervorgerufene Bewegung um die zweite Achse ausführen kann. Aufgrund der verschiedenen Drehachsen führt diese Anordnung zu einer relativ aufwändigen und komplexen Bauweise.

Dementsprechend besteht die Aufgabe der vorliegenden Erfindung darin, einen Messwandler für ein Durchflussmessgerät bereitzustellen, bei dem ein aufwändiges Reinigen des mindestens einen Messrohres vermieden wird und durch den bei Bedarf auch ein in einer Fluid-Leitung strömendes Fluid messbar ist, ohne dass die jeweilige Fluid-Leitung unterbrochen werden muss.

Die Aufgabe wird durch einen Messwandler vom Vibrationstyp gemäß Anspruch 1 gelöst. Vorteilhafte Weiterbildungen der Erfindung sind in den Unteransprüchen angegeben.

Gemäß der vorliegenden Erfindung wird ein Messwandler vom Vibrationstyp für ein in einem flexiblen Schlauch strömendes Fluid bereitgestellt. Der Messwandler weist eine Schlauchträgereinheit, die zumindest abschnittsweise eine schlaufenförmige Außenkontur, um die ein flexibler Schlauch führbar ist, aufweist, eine Spanneinheit, durch die ein im Einsatz um die schlaufenförmige Außenkontur geführter, flexibler Schlauch in Anlage an die schlaufenförmige Außenkontur spannbar ist, mindestens einen an die Schlauchträgereinheit gekoppelten Erreger, durch den die Schlauchträgereinheit zu mechanischen Schwingungen, die mit einer wechselseitigen, elastischen Verformung der Schlauchträgereinheit einhergehen, anregbar ist, und mindestens einen Schwingungs-Sensor, durch den mechanische Schwingungen der Schlauchträgereinheit und/oder eines im Einsatz in den Messwandler eingesetzten, flexiblen Schlauches erfassbar sind, auf.

Durch den Aufbau des erfindungsgemäßen Messwandlers ist ein flexibler Schlauch einfach und schnell in den Messwandler einsetzbar und auch wieder ausbaubar. Der erfindungsgemäße Messwandler stellt dabei die Möglichkeit einer Durchflussmessung (z.B. Massedurchfluss, Dichte des Fluids, etc.) mit einer Einweg-Sensorik bereit, was bedeutet, dass das mit Fluid in Kontakt gelangende Bauteil (hier: der flexible Schlauch) nach Gebrauch einfach weggeworfen und durch ein neues ersetzt werden kann. Dadurch ist der in den Messwandler einzusetzende, flexible Schlauch als kostengünstiges Verbrauchsteil (bzw. als Wegwerfartikel) bereitstellbar. An Stelle eines aufwändigen Reinigens kann bei Bedarf einfach der flexible Schlauch ausgetauscht werden. Ferner ermöglicht die erfindungsgemäße Bauweise, dass der flexible Schlauch bei aggresiven oder abrasiven Medien häufig und ohne großen Kostenaufwand austauschbar ist. Darüber hinaus kann der Messwandler auf einfache Weise so ausgebildet sein, dass ein bestehender flexibler Schlauch, wie beispielsweise ein zu medizinischen Zwecken eingesetzter Infusionsschlauch, schnell und einfach in den Messwandler einsetzbar ist, ohne dass der flexible Schlauch hierzu unterbrochen werden muss. Der Aufbau und die Funktionsweise des erfindungsgemäßen Messwandlers sind einfach. Insbesondere wird auf den Einsatz von relativ zueinander verschwenkbaren oder beweglichen Bauteilen des Messwandlers verzichtet, was den Messwandler kostengünstig in der Herstellung und robust im Einsatz macht. Die für eine Coriolis-Massedurchflussmessung oder für eine Coriolis-Dichtemessung erforderlichen Schwingungen werden ausschließlich durch eine wechselseitige, elastische Verformung der Schlauchträgereinheit erzeugt.

Der erfindungsgemäße Messwandler vom Vibrationstyp ist insbesondere für den Einsatz in einem Coriolis-Durchflussmessgerät ausgebildet. Durch solch ein Coriolis-Durchflussmessgerät ist/sind insbesondere ein Massedurchfluss und/oder eine Dichte des strömenden Fluids erfassbar. Das Funktionsprinzip der Coriolis-Durchflussmessung in einem Coriolis-Durchflussmessgerät mit einem erfindungsgemäßen Messwandler ist dabei, dass der von Fluid durchströmte, flexible Schlauch über die Schwingungen der Schlauchträgereinheit zu mechanischen Schwingungen angeregt wird. Aufgrund der Überlagerung der Schwingungen mit der Strömungsbewegung des Fluids wirkt auf das in dem flexiblen Schlauch strömende Fluid eine Corioliskraft. Diese Corioliskraft ist an mindestens einem ersten Bereich entlang der Erstreckungsrichtung des zu Schwingungen angeregten, flexiblen Schlauches entgegengesetzt zu einem von diesem ersten Bereich beabstandet angeordneten, zweiten Bereich ausgerichtet. Werden die Schwingungen des flexiblen Schlauches und/oder der Schlauchträgereinheit an mindestens zwei voneinander entlang der Erstreckungsrichtung des flexiblen Schlauches beabstandeten Schwingungs-Messpunkten durch mindestens einen Schwingungs-Sensor erfasst, so kann aufgrund der auf das strömende Fluid wirkenden Corioliskraft eine Phasenverschiebung der Schwingungen erfasst werden. Diese Phasenverschiebung ist proportional zu dem Massedurchfluss durch den flexiblen Schlauch. Zusätzlich oder alternativ zu dem Massedurchfluss kann durch solch ein Coriolis-Durchflussmessgerät auch eine Dichte des strömenden Fluids bestimmt werden. Hierbei wird das Prinzip ausgenutzt, dass die Resonanzfrequenz der jeweils angeregten Schwingung von der schwingenden Masse und damit von der Dichte des in dem flexiblen Schlauch strömenden Fluids abhängt. Durch Nachregeln der Anregungsfrequenz derart, dass das Schwingungssystem in seiner Resonanzfrequenz angeregt wird, kann die Resonanzfrequenz und daraus wiederum die Dichte des strömenden Fluids bestimmt werden. Zusätzlich oder alternativ können durch solch ein Coriolis-Durchflussmessgerät weitere Funktionen, insbesondere eine Blasendetektion oder eine Detektion von sonstigen, lokalisierten Verunreinigungen, durchgeführt werden. Die Anregung durch den mindestens einen Erreger wird dabei insbesondere durch eine Elektronik des Coriolis-Durchflussmessgerätes gesteuert. Ferner werden durch die Elektronik die von dem mindestens einen Schwingungs-Sensor bereitgestellten Sensorsignale ausgewertet.

Das "Fluid" kann durch ein Gas oder durch eine Flüssigkeit, die je nach Anwendung auch unterschiedliche Viskositäten aufweisen kann, gebildet werden. Das Gas kann dabei auch Feststoffteile, wie das beispielsweise bei pneumatisch gefördertem Staub der Fall ist, oder flüssige Anteile aufweisen. Ferner kann eine Flüssigkeit auch Gaseinschlüsse (Blasen) oder Feststoffteile mitführen. Gravitationsgeförderte Feststoffe werden nicht als "Fluid" bezeichnet. Gemäß einer Weiterbildung der Erfindung wird das Fluid durch eine Flüssigkeit gebildet.

Unter einem "flexiblen Schlauch" wird ein Schlauch verstanden, der in Richtung quer zu dessen Erstreckungsrichtung beweglich ist. Dies bedeutet insbesondere, wie unterhalb in Bezug auf eine Weiterbildung erläutert wird, dass der Schlauch entlang dessen Erstreckungsrichtung eine verhältnismäßig niedrige Biegesteifigkeit aufweist. Der flexible Schlauch muss dabei nicht zwingend elastisch ausgebildet sein. Im Hinblick auf die Anbringung des flexiblen Schlauches um die Schlauchträgereinheit in gespanntem Zustand sind aber elastische Eigenschaften, insbesondere entlang von dessen Erstreckungsrichtung, vorteilhaft.

Mit einer schlaufenförmigen Außenkontur wird auf einen Verlauf Bezug genommen, der im Wesentlichen eine U-Form aufweist. Dabei kann die U-Form in dem Bereich der oberen Enden des "U", die jeweils durch eine Schlauchzuführung und eine Schlauchabführung gebildet werden, gegenüber einem zentralen Bereich der U-Form verjüngt oder alternativ auch aufgeweitet sein. Wie nachfolgend in Bezug auf eine Ausführungsform der Erfindung erläutert wird, ist eine Verjüngung im Bereich der oberen Enden des "U" im Hinblick auf die Symmetrieeigenschaften vorteilhaft. Insbesondere ist die Schlaufenform derart ausgebildet, dass sich der Abstand zwischen den beiden Schlaufenarmen von einem minimalen Abstand (im Bereich der Schlauchzuführung und Schlauchabführung) zu einem maximalen Abstand (in einem zentralen Bereich der Schlauchträgereinheit) vergrößert und anschließend zu dem Umkehrpunkt der schlaufenförmigen Außenkontur wieder verjüngt. Mit einer "zumindest abschnittsweise schlaufenförmigen Außenkontur" wird nicht ausgeschlossen, dass die Schlauchträgereinheit an Abschnitten, an denen ein um die schlaufenförmige Außenkontur geführter Schlauch nicht an der Schlauchträgereinheit anliegt, eine anderweitig geformte Außenkontur aufweist. Beispielsweise kann die Schlauchträgereinheit insgesamt eine ovale oder elliptisch geformte Außenkontur aufweisen.

Im Zusammenhang mit der vorliegenden Erfindung wird mit einem "in den Messwandler eingesetzten, flexiblen Schlauch" auf einen flexiblen Schlauch Bezug genommen, der in der (in Anspruch 1) beanspruchten Anordnung um die schlaufenförmige Außenkontur geführt und gespannt ist. Die Spannung des in Anlage an die schlaufenförmige Außenkontur gespannten Schlauches ist vorzugsweise derart gewählt, dass der flexible Schlauch und die Schlauchträgereinheit bezüglich der Schwingungen aneinander gekoppelt sind. Dies bedeutet insbesondere, dass die zu Schwingungen angeregte Schlauchträgereinheit den flexiblen Schlauch zu entsprechenden Schwingungen anregt. Ferner ist die Spannung insbesondere dann, wenn die Schwingungs-Messpunkte an der Schlauchträgereinheit vorgesehen sind, so hoch, dass die durch die Corioliskraft hervorgerufene Phasenverschiebung von dem flexiblen Schlauch auf die Schlauchträgereinheit übertragbar ist. Zusätzlich zu der Spannung kann auch noch eine weitere Kopplung zwischen der Schlauchträgereinheit und dem flexiblen Schlauch vorgesehen sein. Diese weitere Kopplung kann beispielsweise durch eine Klebeverbindung, eine Einrastverbindung des flexiblen Schlauches in eine entsprechende, in der Schlauchträgereinheit vorgesehene Rinne, etc. gebildet werden. Ist eine weitere Kopplung vorgesehen, so kann die Spannung entsprechend niedriger gewählt werden (beispielsweise nur so hoch, dass der Schlauch in Anlage an der schlaufenförmigen Außenkontur ist). Gemäß einer Weiterbildung erfolgt die Kopplung zwischen der Schlauchträgereinheit und dem flexiblen Schlauch ausschließlich durch die von der Spanneinheit erzeugte Spannung des flexiblen Schlauches.

Die Anregung der Schlauchträgereinheit zu mechanischen Schwingungen durch den mindestens einen Erreger kann auf unterschiedliche Weise, insbesondere elektromechanisch, kapazitiv, etc. erfolgen. In entsprechender Weise kann die Erfassung der mechanischen Schwingungen auf unterschiedliche Weise, insbesondere elektromechanisch, kapazitiv, optisch, etc. erfolgen. Dabei können die mechanischen Schwingungen der Schlauchträgereinheit oder auch direkt die mechanischen Schwingungen des flexiblen Schlauches erfasst werden.

Die vorliegende Erfindung betrifft auch einen Messwandler, in dem ein flexibler Schlauch in der (in Anspruch 1 und gegebenenfalls in mindestens einem der Unteransprüche) beanspruchten Anordnung eingesetzt ist.

Gemäß einer Weiterbildung verlaufen die Schlauchträgereinheit und der Schlauchverlauf eines im Einsatz in den Messwandler eingesetzten, flexiblen Schlauches spiegelsymmetrisch in Bezug auf eine Symmetrieebene. Die Symmetrieebene verläuft dabei zwischen einer Schlauchzuführung zu der Schlauchträgereinheit und einer Schlauchabführung von der Schlauchträgereinheit, erstreckt sich durch einen gegenüberliegend von der Schlauchzuführung und Schlauchabführung gelegenen Umkehrpunkt der schlaufenförmigen Außenkontur und steht ferner senkrecht auf einer Schlaufenebene, die durch die Schlaufenform eines im Einsatz in den Messwandler eingesetzten, flexiblen Schlauches festgelegt wird. Wie unterhalb noch im Detail erläutert wird, werden durch solch eine Symmetrie noch weitere Funktionalitäten, wie beispielsweise eine Blasendetektion, ermöglicht.

Gemäß einer Weiterbildung weist die Schlauchträgereinheit in einer Schlaufenebene, die durch die Schlaufenform eines im Einsatz in den Messwandler eingesetzten flexiblen Schlauches festgelegt wird, eine geschlossene Form, insbesondere eine ovale Form, auf. Insbesondere weist eine Querschnittfläche der Schlauchträgereinheit entlang der Schlaufenebene eine geschlossene Form auf. Dadurch wird eine stabile, robuste und kompakte Ausführung der Schlauchträgereinheit realisiert. Anstelle einer ovalen Form ist grundsätzlich auch eine kreisrunde Form möglich. Vorteilhaft ist eine ovale, insbesondere elliptische Form, wobei in diesem Fall bevorzugt ist, dass das Verhältnis aus L/R, wobei mit L die längere Halbachse der Ellipse und mit R der größere Krümmungsradius der Ellipse bezeichnet werden, größer als null und deutlich kleiner als 1 ist (0 < L/R << 1). Weiterhin ist bevorzugt, dass eine Biegesteifigkeit der Schlauchträgereinheit entlang deren schlaufenförmiger Außenkontur (abgesehen von Bereichen, an denen eine noch zu beschreibende Fixierung vorgesehen ist) im Wesentlichen konstant ist.

Gemäß einer Weiterbildung ist vorgesehen, dass der mindestens eine Erreger und/oder der mindestens eine Schwingungs-Sensor innenseitig der Schlauchträgereinheit angeordnet ist/sind. Dadurch wird eine kompakte Ausbildung des Messwandlers realisiert. Ferner sind der Erreger und/oder der Schwingungs-Sensor auf diese Weise geschützt angeordnet. Mit "innenseitig" wird auf die gegenüberliegende Seite des im Einsatz in den Messwandler eingesetzten, flexiblen Schlauches Bezug genommen. Weist die Schlauchträgereinheit eine geschlossene Form auf, so sind sie vorzugsweise in einem innerhalb der geschlossenen Form ausgebildeten Freiraum angeordnet. Vorzugsweise sind sämtliche Erreger und Schwingungs-Sensor(en) innenseitig der Schlauchträgereinheit angeordnet.

Gemäß einer Weiterbildung wird die Schlauchträgereinheit durch eine auf der Symmetrieebene angeordnete Fixierung im Bereich der Schlauchzuführung und der Schlauchabführung sowie durch eine auf der Symmetrieebene angeordnete Fixierung im Bereich des Umkehrpunktes in zwei zueinander spiegelsymmetrisch relativ zu der Symmetrieebene angeordnete Schwingungssysteme unterteilt. Aufgrund dieser Vorsehung von zwei, in Serie durchströmten Schwingungssystemen wird in Bezug auf die Durchführung von Durchflussmessungen eine Redundanz bereitgestellt, die zusätzliche Funktionalitäten, insbesondere eine Detektion von lokalisierten, in dem Fluid mitgeführten Verunreinigungen, ermöglicht. Eine Fixierung unterdrückt dabei in dem jeweiligen Bereich Schwingungen der Schlauchträgereinheit. Die Fixierung kann beispielsweise an einem Gehäuse oder einem Trägerbauteil des Messwandlers, insbesondere innenseitig der Schlauchträgereinheit, vorgesehen sein. Zusätzlich zu den Fixierungen kann auch außenseitig der Schlauchträgereinheit mindestens eine Schlauchfixierung für einen im Einsatz in den Messwandler eingesetzten, flexiblen Schlauch vorgesehen sein. Durch solch eine, vorzugsweise jeweils gegenüberliegend von der Fixierung für die Schlauchträgereinheit angeordnete Schlauchfixierung werden Schwingungen des Schlauches im Bereich der Schlauchfixierung unterdrückt. Durch die Schlauchfixierung wird insbesondere ein in den Messwandler eingesetzter, flexibler Schlauch gegen die Schlauchträgereinheit gedrückt. Gleichzeitig sollte der Schlauch durch die Schlauchfixierung nicht vollständig oder nicht übermäßig zusammengedrückt werden, so dass dadurch kein zu großer Strömungswiderstand entsteht.

Gemäß einer Weiterbildung sind die beiden Schwingungssysteme durch den mindestens einen Erreger durch wechselseitiges Vergrößern und Verkleinern des Abstandes der zwischen den Fixierungen jeweils verlaufenden Bogenabschnitte der Schlauchträgereinheit zu zueinander (spiegel)symmetrischen Schwingungen anregbar. Dementsprechend weist der Messwandler im Einsatz zwei identische, (spiegel)symmetrisch zueinander schwingende Schwingungssysteme auf, an denen jeweils eine Coriolis-Massedurchflussmessung, eine Dichtemessung, etc. durchführbar ist. Diese beiden Schwingungssysteme werden in Serie von dem strömenden Fluid durchströmt, so dass im Hinblick auf diese Messungen eine Redundanz gegeben ist. Die Anregung kann unter anderem durch einen, sich zwischen den beiden Bogenabschnitten erstreckenden Erreger, dessen Länge periodisch veränderbar ist, erfolgen. Ferner können beispielsweise auch zwei Erreger vorgesehen sein, die sich zu einer Seite jeweils gegenüber einem zwischen den beiden Bogenabschnitten angeordneten Trägerbauteil und zu der anderen Seite jeweils an einem zugehörigen Bogenabschnitt abstützen und deren Länge periodisch veränderbar ist.

Gemäß einer Weiterbildung sind jedem Schwingungssystem jeweils zwei Schwingungs-Sensoren zugeordnet, die jeweils beabstandet voneinander entlang dem zugehörigen, zwischen den Fixierungen verlaufenden Bogenabschnitt der Schlauchträgereinheit angeordnet sind. Auf diese Weise kann bei jedem Schwingungssystem eine Phasenverschiebung zwischen einem eingangsseitigen und einem ausgangsseitigem Abschnitt dieses Schwingungssystems erfasst werden. Dementsprechend kann in jedem Schwingungssystem eine Coriolis-Massedurchflussmessung durchgeführt werden.

Gemäß einer Weiterbildung sind die beiden Schwingungssysteme bezüglich der Anordnung der Schwingungs-Messpunkte des mindestens einen Schwingungs-Sensors und der Erregungs-Punkte des mindestens einen Erregers spiegelsymmetrisch zueinander relativ zu der Symmetrieebene ausgebildet. Als "Schwingungs-Messpunkt" wird dabei der Punkt der Schlauchträgereinheit und/oder des flexiblen Schlauches bezeichnet, an dem eine Schwingung derselben bzw. desselben erfasst wird. Als "Erregungs-Punkt" wird in entsprechender Weise der Punkt der Schlauchträgereinheit bezeichnet, an dem eine Anregung derselben zu Schwingungen erfolgt. Diese Symmetriebeziehung ist dabei unabhängig von der konkreten Anordnung und Ausbildung der zugehörigen Erreger und Schwingungs-Sensor(en) gegeben. Vorzugsweise erfüllen aber auch die Erreger sowie die Schwingungs-Sensoren selbst die oberhalb angegebene Symmetriebeziehung.

Gemäß einer Weiterbildung sind die Schlauchträgereinheit, der vorbestimmte Verlauf eines im Einsatz in den Messwandler eingesetzten flexiblen Schlauches, abgesehen von dem Bereich der Schlauchzuführung und der Schlauchabführung und dem Bereich des Umkehrpunktes, die Anordnung der Schwingungs-Messpunkte durch den mindestens einen Schwingungs-Sensor, und/oder die Anordnung der Erregungs-Punkte der Schlauchträgereinheit durch den mindestens einen Erreger spiegelsymmetrisch relativ zu einer senkrecht zu der Symmetrieebene und senkrecht zu der Schlaufenebene verlaufenden Ebene ausgebildet. Aufgrund dieser Symmetrie können in den beiden Schwingungssystemen im Wesentlichen identische Coriolis-Massedurchflussmessungen, Dichtemessungen, etc. durchgeführt werden. Da die beiden Schwingungssysteme in Serie von dem strömenden Fluid durchströmt werden, ist grundsätzlich eine Redundanz gegeben. Auftretende Abweichungen zwischen den beiden Schwingungssystemen können zusätzlich ausgewertet werden, wie beispielsweise zur Blasendetektion oder allgemeiner zur Detektion von lokalisierten Verunreinigungen. Die Erregungs-Punkte können dabei insbesondere auf der oberhalb genannten (senkrecht zu der Symmetrieebene und senkrecht zu der Schlaufenebene verlaufenden) Ebene liegen. Ferner ist insbesondere vorgesehen, dass jedes Schwingungssystem jeweils auf beiden Seiten der Ebene einen (oder gegebenenfalls auch mehrere) Schwingungs-Messpunkt(e) aufweist. Falls die Schlauchträgereinheit oval oder elliptisch ausgebildet ist, erstreckt sich vorzugsweise die längere Halbachse der Ellipse senkrecht zu der Ebene (und innerhalb der Symmetrieebene) und die kürzere Halbachse verläuft innerhalb der Ebene. Wie oberhalb erwähnt ist, tritt bei dem Verlauf eines, im Einsatz in den Messwandler eingesetzten, flexiblen Schlauches eine Abweichung der Symmetrie im Bereich der Schlauchzuführung und der Schlauchabführung auf der einen Seite und im Bereich des Umkehrpunktes auf der anderen Seite auf. Im Hinblick auf die Schwingungen kann diese Symmetrieabweichung weitgehend dadurch unterdrückt werden, dass in diesen Bereichen (durch entsprechende Fixierungen und gegebenenfalls zusätzlichen Schlauchfixierungen) Schwingungen weitgehend unterdrückt werden.

Gemäß einer Weiterbildung weist die Schlauchträgereinheit eine entlang der schlaufenförmigen Außenkontur verlaufende Rinne zur Aufnahme eines im Einsatz in den Messwandler eingesetzten, flexiblen Schlauches auf. Dadurch wird ein besserer Halt des flexiblen Schlauches auf der Schlauchträgereinheit gewährleistet. Die Rinne ist dabei vorzugsweise an die jeweilige Schlauchform angepasst. Der Schlauch kann unter anderem einen runden oder ovalen Querschnitt aufweisen. Im Falle eines ovalen Querschnittes liegt der Schlauch vorzugsweise in dem Bereich mit dem größeren Krümmungsradius auf der Schlauchträgereinheit, insbesondere in der Rinne, auf. Die Form der Rinne ist vorzugsweise an die Form des Schlauches angepasst. Die Rinne kann dabei auch derart ausgebildet sein, dass sie sich zumindest an einigen Abschnitten nach außen hin wieder etwas verjüngt, so dass der Schlauch unter Krafteinwirkung in die Rinne gedrückt werden muss und darin einrastet.

Gemäß einer Weiterbildung ist der flexible Schlauch zumindest anteilig aus einem flexiblem Kunststoff und/oder einem flexiblen Gewebe gebildet. Dabei sind auch natürliche, flexible Materialien, wie beispielsweise Naturkautschuk, möglich. Der flexible Schlauch kann dabei vollständig aus einem flexiblen Kunststoff und/oder einem flexiblen Gewebe gebildet sein. Er kann aber auch durch ein weiteres Material, wie beispielsweise durch eine Metallspirale, verstärkt sein. Durch eine Verstärkung kann ein Zusammenquetschen des flexiblen Schlauches bei dessen Einsatz verhindert oder verringert werden. Hierzu wird angemerkt, dass ein Zusammenquetschen des Schlauches grundsätzlich keine nachteilige Auswirkung auf die Coriolis-Massedurchflussmessung hat. Es kann jedoch unter anderem im Hinblick auf den Strömungswiderstand bevorzugt sein, dass der Schlauch nicht oder nur wenig zusammengequetscht wird.

Gemäß einer Weiterbildung weist die Schlauchträgereinheit eine deutlich höhere Biegesteifigkeit als der flexible (leere) Schlauch auf. Je größer dieses Verhältnis ist, desto höher ist die Messgenauigkeit (beispielsweise einer Coriolis-Massedurchflussmessung oder einer Dichtemessung). Vorzugsweise ist eine Biegesteifigkeit des (leeren) Schlauches entlang dessen Erstreckungsrichtung (in Bezug auf quer zu der Erstreckungsrichtung wirkende Kräfte) vernachlässigbar im Vergleich zu einer Biegesteifigkeit der Schlauchträgereinheit entlang deren schlaufenförmiger Außenkontur (in Bezug auf quer zu der schlaufenförmigen Außenkontur wirkende Kräfte). Gemäß einer Weiterbildung ist ein Verhältnis der Biegesteifigkeit der Schlauchträgereinheit entlang der schlaufenförmigen Außenkontur zu der Biegesteifigkeit des flexiblen (leeren) Schlauches entlang dessen Erstreckungsrichtung mindestens 10. Bevorzugt ist das Verhältnis mindestens 100. Die Biegesteifigkeit, deren Einheit in Nm² angegeben wird, wird dabei, wie in dem Fachgebiet bekannt ist, durch das Produkt aus Elastizitätsmodul und Flächenträgheitsmoment (hier bezüglich einer Querschnittfläche senkrecht zu der Erstreckungsrichtung des Schlauches bzw. senkrecht zu der schlaufenförmigen Außenkontur der Schlauchträgereinheit) gebildet. Das jeweils angegebene Verhältnis gilt dabei vorzugsweise über den gesamten Verlauf entlang der schlaufenförmigen Außenkontur. Gemäß einer Weiterbildung ist die Schlauchträgereinheit aus einem metallischen Material, wie beispielsweise aus Metall, einer Legierung, Stahl, etc., gebildet. Alternativ sind auch ein steifer Kunststoff, Holz, etc. möglich. Weiterhin ist gemäß einer Weiterbildung vorgesehen, dass die Schlauchträgereinheit auch ein deutlich höheres Gewicht als der (leere) flexible Schlauch aufweist. Insbesondere sind gemäß einer Weiterbildung die oberhalb in Bezug auf die Biegesteifigkeit angegebenen Verhältnisse vorteilhaft.

Gemäß einer Weiterbildung ist im Bereich der Schlauchzuführung und der Schlauchabführung außenseitig der Schlauchträgereinheit eine Spanneinheit vorgesehen, durch die ein im Einsatz um die schlaufenförmige Außenkontur geführter, flexibler Schlauch in Anlage an die schlaufenförmige Außenkontur spannbar ist. Gemäß einer Weiterbildung weist die Spanneinheit im Bereich der Schlauchzuführung und der Schlauchabführung beidseitig der Symmetrieebene bewegbare Spannelemente auf, wobei durch Reduzieren des Abstands zwischen dem jeweiligen Spannelement und der Symmetrieebene ein im Einsatz um die schlaufenförmige Außenkontur geführter flexibler Schlauch in Anlage an die schlaufenförmige Außenkontur spannbar ist und wobei die Spannelemente in mindestens einer Position mit reduziertem Abstand zu der Symmetrieebene fixierbar sind. Durch eine derartige Spanneinheit kann ein flexibler Schlauch schnell und einfach in den Messwandler eingespannt werden. Gemäß einer Weiterbildung sind dabei mehrere, verschiedene, fixierbare Positionen der Spannelemente möglich, so dass Schläuche mit verschiedenen Schlauchdurchmessern in den Messwandler einsetzbar sind. Ferner ist gemäß einer Weiterbildung vorgesehen, dass die Spanneinheit mindestens ein, relativ zu einem Gehäuse oder einem Trägerbauteil fixiertes Gegenstück aufweist, so dass der flexible Schlauch jeweils zwischen einem Spannelement und dem Gegenstück festklemmbar ist. Sowohl die Spannelemente als auch das mindestens eine Gegenstück können beispielsweise durch Zylinder oder Rollen gebildet werden.

Die vorliegende Erfindung betrifft ferner ein Coriolis-Durchflussmessgerät für ein in einem flexiblen Schlauch strömendes Fluid, das einen erfindungsgemäßen Messwandler, der gegebenenfalls zusätzlich gemäß einer der oberhalb erläuterten Varianten ausgebildet ist, sowie eine Elektronik, durch die Messsignale des mindestens einen Schwingungs-Sensors zur Bestimmung mindestens einer physikalischen Messgröße des strömenden Fluids auswertbar sind, aufweist. Eine mögliche Funktionsweise solch eines Coriolis-Durchflussmessgerätes wurde bereits oberhalb erläutert. Die physikalische Messgröße des strömenden Fluids kann insbesondere ein Massedurchfluss, eine Dichte des strömenden Fluids, etc., sein.

Gemäß einer Weiterbildung ist die Elektronik derart ausgebildet, dass nach Einsetzen eines leeren, flexiblen Schlauches in den Messwandler eine Nullpunkt-Kalibrierung für den spezifischen Schlauch durchführbar ist und die dabei bestimmten Parameter für eine nachfolgende Durchflussmessung von Fluid durch diesen Schlauch verwendbar sind. Auf diese Weise können, je nach Anwendung, verschiedene, flexible Schläuche in Kombination mit dem Coriolis-Durchflussmessgerät eingesetzt werden. Mit einer "nachfolgenden Durchflussmessung" wird insbesondere auf eine Massedurchflussmessung, eine Dichtemessung und/oder eine Detektion von lokalisierten Verunreinigungen (beispielsweise Blasen in einer Flüssigkeit) Bezug genommen.

Gemäß einer Weiterbildung ist die Elektronik derart ausgebildet, dass durch diese im Einsatz des Coriolis-Durchflussmessgerätes mit in den Messwandler eingesetzten, flexiblen, von Fluid durchströmten Schlauch zur Detektion einer lokalisierten, in dem strömenden Fluid mitgeführten Verunreinigung mindestens ein an einem ersten Schwingungssystem erfasstes Messsignal auf das Auftreten einer Anomalie überwachbar ist. Falls solch eine Anomalie in dem ersten Schwingungssystem detektiert wird, ist durch die Elektronik ferner überwachbar, ob nach einem erwartungsgemäßen Zeitintervall in dem zweiten Schwingungssystem eine entsprechende Anomalie in mindestens einem, an dem zweiten Schwingungssystem erfassten Messsignal auftritt. Falls solch eine Anomalie in dem zweiten Schwingungssystem nach dem erwartungsgemäßen Zeitintervall detektiert wird, ist durch die Elektronik das Passieren von einer lokalisierten Verunreinigung signalisierbar. Solch ein Detektionsmechanismus ist in vielen Anwendungen vorteilhaft, beispielsweise um bei Passieren einer lokalisierten Verunreinigung einen Messwert zu korrigieren und/oder einen Alarm oder eine Fehlermeldung auszulösen. Wird durch die Elektronik das Passieren einer Verunreinigung signalisiert, kann dies nicht nur intern in dem Coriolis-Durchflussmessgerät verwendet werden. Beispielsweise kann vorgesehen sein, dass dies alternativ oder zusätzlich einem Benutzer und/oder einer in Kommunikationsverbindung stehenden, übergeordneten Steuereinheit signalisiert wird. Eine lokalisierte Verunreinigung wird beispielsweise durch eine in Flüssigkeit mitgeführte Gasblase und/oder durch einen in Flüssigkeit oder Gas mitgeführten Festkörper gebildet.

Insbesondere ist die Elektronik derart ausgebildet, dass durch diese (zumindest nach Aktivieren der Detektions-Funktion) während des Einsatzes des Coriolis-Durchflussmessgerätes solch eine Detektion dauerhaft durchgeführt wird. Das überwachte Messsignal wird beispielsweise durch ein Phasendifferenzsignal, einen Massedurchfluss, eine aufintegrierte Masse, eine Resonanzfrequenz der Schwingung, und/oder eine Dämpfung der Schwingung, gebildet, wobei dieses Messsignal in dem Coriolis-Durchflussmessgerät jeweils in Bezug auf das betreffende Schwingungssystem erfasst, bestimmt und/oder verarbeitet wird. Eine "Anomalie" in dem Messsignal ist dabei eine typische, durch eine Verunreinigung bei Passieren des Schwingungssystems ausgelöste, vorübergehende Störung oder Abweichung des Messsignals. Das "erwartungsgemäße Zeitintervall" kann ein fester, konstanter Wert sein. Es kann aber auch in Abhängigkeit von der tatsächlichen Strömungsgeschwindigkeit des Fluids, das zum Beispiel aus dem gemessenen Massedurchfluss erhältlich ist, bestimmt werden. Gemäß einer Weiterbildung wird zunächst nur das stromaufwärtige Schwingungssystem auf das Auftreten einer Anomalie des Messsignals überwacht (die Strömungsrichtung ist der Elektroni in der Regel bekannt) und gegebenenfalls werden die weiteren, oberhalb beschriebenen Schritte durchgeführt, falls solch eine Anomalie in dem ersten Schwingungssystem erfasst wird.

Weitere Vorteile und Zweckmäßigkeiten der Erfindung ergeben sich anhand der nachfolgenden Beschreibung eines Ausführungsbeispiels unter Bezugnahme auf die beigefügten Figuren. Von den Figuren zeigen:
- Fig. 1:: eine schematische Darstellung eines Coriolis-Durchflussmessgerätes gemäß einer Ausführungsform der vorliegenden Erfindung in Querschnittansicht, wobei ein erster Anregungszustand dargestellt ist;
- Fig. 2:: eine schematische Darstellung des in Fig. 1 dargestellten Coriolis-Durchflussmessgerätes, wobei ein zweiter Anregungszustand dargestellt ist;
- Fig. 3:: eine schematische Darstellung einer Querschnittansicht durch einen Arm der Schlauchträgereinheit und durch einen um die Schlauchträgereinheit geführten, flexiblen Schlauch gemäß einer Ausführungsform der vorliegenden Erfindung; und
- Fig. 4:: eine schematische Darstellung einer Querschnittansicht durch einen Arm der Schlauchträgereinheit und durch einen um die Schlauchträgereinheit geführten, flexiblen Schlauch gemäß einer weiteren Ausführungsform der vorliegenden Erfindung.

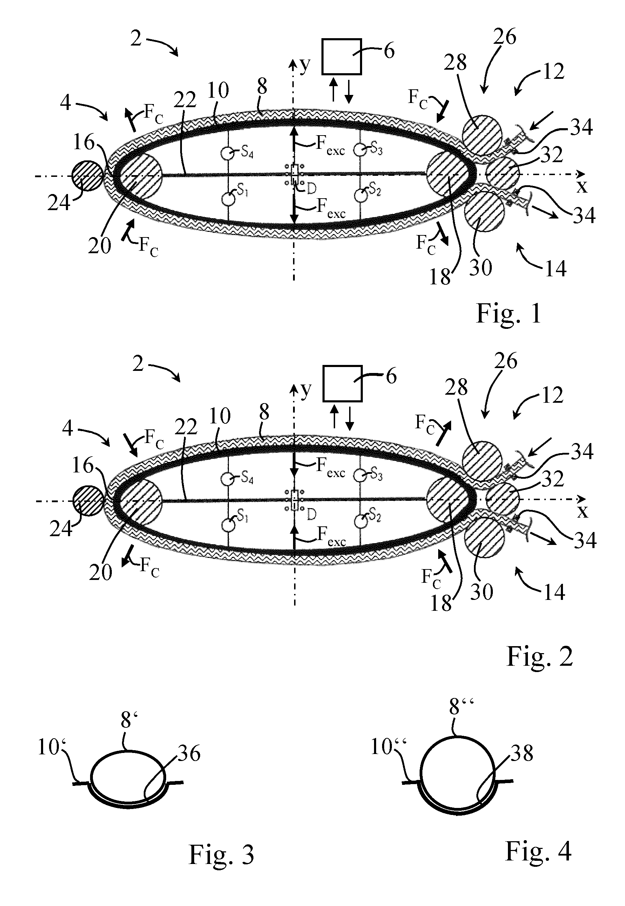

Das in den Fig. 1 und 2 dargestellte Coriolis-Durchflussmessgerät 2 weist einen Messwandler 4 und eine Elektronik 6 auf. Der Messwandler 4 ist dabei in den Fig. 1 und 2 im Einsatz mit einem in den Messwandler 4 eingesetzten, flexiblen Schlauch 8 dargestellt. Der Messwandler 4 weist eine Schlauchträgereinheit 10 auf, die in dem Bereich, in dem die Schlauchträgereinheit 10 im Einsatz in Kontakt mit dem flexiblen Schlauch 8 steht, eine schlaufenförmige Außenkontur aufweist. Um diese schlaufenförmige Außenkontur ist der flexible Schlauch 8 geführt. Der flexible Schlauch 8 bildet in dem Bereich entlang der schlaufenförmigen Außenkontur eine Schlaufenform, durch die eine Schlaufenebene festgelegt wird. Die Schlaufenebene entspricht in den Darstellungen der Fig. 1 und 2 der xy-Ebene, die durch die dargestellte x-Achse und y-Achse aufgespannt wird. Die Darstellungen der Fig. 1 und 2 zeigen jeweils eine Querschnittansicht des Coriolis-Durchflussmessgerätes 2 entlang dieser Schlaufenebene (bzw. xy-Ebene).

In der Schlaufenebene (bzw. xy-Ebene) weist die Schlauchträgereinheit 10 (bzw. deren Querschnitt entlang der Schlaufenebene) bei der vorliegenden Ausführungsform eine geschlossene, ovale Form auf. Vorliegend wird die ovale Form durch eine Ellipse gebildet. Die längere Halbachse dieser Ellipse erstreckt sich dabei entlang der x-Achse, während sich die kürzere Halbachse der Ellipse entlang der y-Achse erstreckt. Senkrecht zu der x- und der y-Achse erstreckt sich die (nicht dargestellte) z-Achse, auf die teilweise zur Erläuterung der Figuren Bezug genommen wird.

Wie anhand der Fig. 1 und 2 ersichtlich ist, ist die Schlauchträgereinheit 10 spiegelsymmetrisch zu der xz-Ebene, die als Symmetrieebene bezeichnet wird, angeordnet. Die Symmetrieebene (xz-Ebene) verläuft dabei zwischen einer Schlauchzuführung 12 (des flexiblen Schlauches 8) zu der Schlauchträgereinheit 10 und einer Schlauchabführung 14 (des flexiblen Schlauches 8) von der Schlauchträgereinheit 10. Die schlaufenförmige Außenkontur weist auf der von der Schlauchzuführung 12 und Schlauchabführung 14 gegenüberliegenden Seite einen Umkehrpunkt 16 (bzw. Maximum des schlaufenförmigen Bogens) auf, durch den sich die Symmetrieebene (xz-Ebene) ebenfalls erstreckt. Ferner steht die Symmetrieebene (xz-Ebene) senkrecht auf der Schlaufenebene (xy-Ebene).

Auch der Schlauchverlauf des in den Messwandler 4 eingesetzten, flexiblen Schlauches 8 ist zumindest in dem Bereich, in dem der Schlauch 8 an die schlaufenförmige Außenkontur der Schlauchträgereinheit 10 anliegt, spiegelsymmetrisch zu der Symmetrieebene (xz-Ebene). Ferner ist der Schlauchverlauf des flexiblen Schlauches 8 bei der dargestellten Ausführungsform auch in dem Bereich der Schlauchzuführung 12 und der Schlauchabführung 14 spiegelsymmetrisch zu der Symmetrieebene (xz-Ebene).

Innenseitig der Schlauchträgereinheit 10 sind jeweils eine erste Fixierung 18 und eine zweite Fixierung 20 vorgesehen. Die Fixierungen 18, 20 sind jeweils auf der Symmetrieebene angeordnet. Die erste Fixierung 18 ist dabei in dem Bereich der Schlauchzuführung 12 und der Schlauchabführung 14 angeordnet. Die zweite Fixierung 20 ist in dem Bereich des Umkehrpunktes 16 der schlaufenförmigen Außenkontur angeordnet. In der dargestellten Ausführungsform werden die Fixierungen 18, 20 jeweils durch Zapfen gebildet, deren Außendurchmesser an den Innendurchmesser der Schlauchträgereinheit 10 in dem betreffenden Bereich angepasst ist. Die Fixierungen 18 und 20 stehen dabei in derart engem Kontakt mit der Schlauchträgereinheit 10, dass eine Schwingung der Schlauchträgereinheit 10 im Bereich der Symmetrieebene (xz-Ebene) vollständig oder zumindest weitgehend unterbunden wird. Dementsprechend wird die Schlauchträgereinheit 10 durch die Fixierungen 18, 20 in zwei zueinander spiegelsymmetrisch relativ zu der Symmetrieebene (xz-Ebene) angeordnete Schwingungssysteme unterteilt.

Die Fixierungen 18 und 20 sind dabei vorzugsweise relativ zueinander fest angeordnet. Dies kann beispielsweise über eine entsprechende Querstrebe 22 erfolgen, die sich zwischen den beiden Fixierungen 18, 20 erstreckt. Ferner ist vorzugsweise vorgesehen, dass die Fixierungen 18, 20 auch ortsfest relativ zu der äußeren Umgebung des Coriolis-Durchflussmessgerätes 2 angeordnet sind, um eine Schwingung des gesamten Coriolis-Durchflussmessgerätes 2 relativ zu der äußeren Umgebung zu vermeiden. Hierzu kann beispielsweise ein Befestigungsabschnitt vorgesehen sein, über den die Fixierungen 18, 20, oder ein fest mit den Fixierungen 18, 20 verbundenes Bauteil (wie beispielsweise die Querstrebe 22) an einem in der äußeren Umgebung vorgesehen Fixierpunkt fixierbar sind. Ein mit den Fixierungen 18, 20 fest verbundenes Bauteil kann insbesondere durch ein (nicht dargestelltes) Gehäuse- oder Trägerbauteil des Coriolis-Durchflussmessgerätes 2 oder durch die Querstrebe 22 gebildet werden.

Im Bereich des Umkehrpunktes 16 der schlaufenförmigen Außenkontur ist außenseitig der Schlauchträgereinheit 10 auf der Symmetrieebene (xz-Ebene) zusätzlich eine Schlauchfixierung 24 vorgesehen. Die Schlauchfixierung 24 wird bei der vorliegenden Ausführungsform durch ein in der Schlaufenebene (xy-Ebene) bewegliches Bauteil, wie beispielsweise durch einen schwenkbaren Zapfen, gebildet. Die Schlauchfixierung 24 ist dabei in verschiedenen Abständen relativ zu dem Umkehrpunkt 16 fixierbar, so dass unterschiedliche Schlauchstärken zwischen der Schlauchfixierung 24 und der Schlauchträgereinheit 10 im Bereich des Umkehrpunktes 16 eingeklemmt werden können.

Auf der gegenüberliegenden Seite des Umkehrpunktes 16 (und damit im Bereich der Schlauchzuführung 12 und der Schlauchabführung 14) ist außenseitig der Schlauchträgereinheit 10 eine Spanneinheit 26 vorgesehen, durch die ein im Einsatz um die schlaufenförmige Außenkontur geführter, flexibler Schlauch 8 in Anlage an die schlaufenförmige Außenkontur spannbar ist. Die Spanneinheit 26 weist zwei Spannelemente 28, 30 auf, die zumindest in der xy-Ebene bewegbar sind. Bei der vorliegenden Ausführungsform werden die Spannelemente 28, 30 jeweils durch Zapfen oder auch Rollen gebildet. Dabei ist ein Spannelement 28 im Bereich der Schlauchzuführung 12 (in den Fig. 1 und 2 oben dargestellt) angeordnet, während das andere Spannelement 30 im Bereich der Schlauchabführung 14 (in den Fig. 1 und 2 unten dargestellt) angeordnet ist. Auf der Symmetrieebene (xz-Ebene) und außenseitig der Schlauchträgereinheit 10 ist ferner ein fest angeordnetes Spann-Gegenstück 32 vorgesehen. Die Spannelemente 28, 30 sind bei der vorliegenden Ausführungsform spiegelsymmetrisch zueinander relativ zu der Symmetrieebene (xz-Ebene) angeordnet.

Die Spannelemente 28, 30 sind derart ausgebildet, dass ihr Abstand zu der Symmetrieebene (xz-Ebene), insbesondere zu dem Spann-Gegenstück 32 und zu der Schlauchträgereinheit 10, nach Bedarf vergrößert und verkleinert werden kann. Insbesondere können die Spannelemente 28, 30 in der xy-Ebene schwenkbar ausgebildet sein. Die Spannelemente 28, 30 sind dabei jeweils in verschiedenen Abständen relativ zu dem Spann-Gegenstück 32 und der Schlauchträgereinheit 10 fixierbar (bzw. einrastbar), so dass unterschiedliche Schlauchstärken zwischen dem jeweiligen Spannelement 28 bzw. 30 und dem Spann-Gegenstück 32 sowie der Schlauchträgereinheit 10 eingeklemmt werden können. Die Spannelemente 28, 30 sind vorzugsweise in einer Stellung, in der ein flexibler Schlauch 8 zwischen diesen und dem Spann-Gegenstück 32 sowie der Schlauchträgereinheit10 eingeklemmt ist, in dem Bereich der Schlauchträgereinheit 10 angeordnet, in dem durch die erste Fixierung 18 eine Schwingung der Schlauchträgereinheit 10 vollständig oder zumindest weitgehend unterbunden wird (z.B. direkt gegenüberliegend von der ersten Fixierung 18). Dadurch wird vermieden, dass die Spannelemente 28, 30 in Schwingungen versetzt werden und/oder der flexible Schlauch periodisch gequetscht wird.

Die erläuterte Ausbildung des Messwandlers 4 ermöglicht dabei, dass ein flexibler Schlauch 8 einfach in den Messwandler 4 eingesetzt werden kann. Vor dem Einsetzen eines flexiblen Schlauches 8 sind die Schlauchfixierung 24 und die Spannelemente 28, 30 geöffnet, was bedeutet, dass deren Abstand jeweils von der Schlauchträgereinheit 10 (und bei den Spannelementen 28, 30 zusätzlich von dem Spann-Gegenstück 32) vergrößert ist. In dieser Stellung kann ein flexibler Schlauch 8 einfach um die schlaufenförmige Außenkontur der Schlauchträgereinheit 10 geführt werden. Anschließend werden die Spannelemente 28, 30 auf das Spann-Gegenstück 32 und die Schlauchträgereinheit 10 zu bewegt, so dass der flexible Schlauch zwischen den Spannelementen 28, 30 und dem Spann-Gegenstück 32 sowie der Schlauchträgereinheit 10 eingeklemmt wird und gleichzeitig um die schlaufenförmige Außenkontur der Schlauchträgereinheit 10 gespannt wird. In einer geeigneten Position werden die Spannelemente 28, 30 fixiert. Gleichzeitig oder zeitlich versetzt zu dem Einspannen durch die Spannelemente 28, 30 wird auch die Schlauchfixierung 24 auf die Schlauchträgereinheit 10 (bzw. auf den Umkehrpunkt 16) zu bewegt, so dass der flexible Schlauch 8 zwischen der Schlauchfixierung 24 und der Schlauchträgereinheit 10 eingeklemmt wird. In einer geeigneten Position wird die Schlauchfixierung 24 fixiert.

Dadurch, dass die Spanneinheit 26 im Bereich der Schlauchzuführung 12 und der Schlauchabführung 14 angeordnet ist und der Abstand zwischen den beiden oberhalb und unterhalb der Symmetrieebene (xz-Ebene) angeordneten Bogenabschnitten der Schlauchträgereinheit 10 in diesem Bereich (aufgrund der ovalen Form der Schlauchträgereinheit 10) reduziert gegenüber dem zentralen Bereich (Bereich der yz-Ebene) der Schlauchträgereinheit 10 ist (d.h. die U-Form ist in dem Bereich der oberen Enden des "U" verjüngt), wird während des Einspannens des flexiblen Schlauches 8 durch die Spanneinheit 26 eine Zugkraft auf den flexiblen Schlauch 8 ausgeübt. Folglich wird der flexible Schlauch 8 durch die Spanneinheit 26 aufgrund der sich im Bereich der Spanneinheit 26 verjüngenden Schlaufenform in Anlage an und um die schlaufenförmige Außenkontur der Schlauchträgereinheit 10 gespannt.

Gegebenenfalls kann der flexible Schlauch 8 auch in seiner Länge elastisch dehnbar sein, so dass er bei dem Spannvorgang durch die Spanneinheit 26 mit einer entsprechenden Spannung um die Schlauchträgereinheit 10 gespannt wird. Ferner kann vorgesehen sein, dass an dem flexiblen Schlauch 8 in definiertem Abstand (entlang des Schlauches 8) entsprechende Rastelemente (z.B. Vorsprünge) vorgesehen sind, die während des Einspannens durch die Spanneinheit 26 (insbesondere durch die Spannelemente 28, 30) festrasten bzw. festklemmen und damit ein "Durchrutschen" des flexiblen Schlauches verhindern. Dadurch kann eine gewünschte und vordefinierte Spannung des flexiblen Schlauches 8 erzielt werden. In den Fig. 1 und 2 sind solche Rastelemente beispielhaft durch Vorsprünge 34 dargestellt, die jeweils zwischen den Spannelementen 28, 30 und dem Spann-Gegenstück 32 ein weiteres Durchrutschen des flexiblen Schlauches 8 verhindern.

Die Klemmkraft zwischen der Schlauchfixierung 24 und der Schlauchträgereinheit 10 sowie die Klemmkraft zwischen den jeweiligen Spannelementen 28, 30 und dem Spann-Gegenstück 32 sowie der Schlauchträgereinheit 10 werden vorzugsweise in Abhängigkeit von der jeweiligen Eigensteifigkeit des in den Messwandler 4 eingesetzten, flexiblen Schlauches 8 und/oder in Abhängigkeit von dem Druck des innerhalb des Schlauches 8 strömenden Fluids bestimmt. Vorzugsweise wird die Klemmkraft so hoch gewählt, dass im Bereich der Schlauchfixierung 24 und im Bereich der Spanneinheit 26 eine Schwingung des betreffenden, flexiblen Schlauches 8 zumindest weitgehend unterbunden wird. Vorzugsweise wird der Schlauch 8 nur so weit zusammengedrückt, dass sich dies nicht nachteilig auf den Strömungswiderstand auswirkt.

Der eingesetzte, flexible Schlauch 8 kann dabei durch einen durchgehenden Schlauch gebildet werden, der für die Durchführung einer Messung durch das Coriolis-Durchflussmessgerät 2 nicht unterbrochen werden darf. Alternativ kann es sich bei dem eingesetzten, flexiblen Schlauch 8 auch um einen Schlauchabschnitt handeln, der über entsprechende (in den Figuren nicht dargestellte Anschlussstücke) an der jeweiligen Rohrleitung, etc. angeschlossen wird. Insbesondere kann es sich bei dem eingesetzten, flexiblen Schlauch 8 um ein kostengünstiges Verbrauchsteil bzw. Verschleißteil (bzw. Wegwerfartikel) handeln, das nach dem Einsatz weggeworfen und durch ein neues ersetzt wird. Insbesondere in letzterem Fall kann der flexible Schlauch 8 speziell für den Einsatz in dem Coriolis-Durchflussmessgerät als Massenartikel bereitgestellt werden. Die Flexibilität des Schlauches 8 wird dabei vorzugsweise derart gewählt, dass der Schlauch nicht oder nicht merklich zu der Steifigkeit des in Schwingung versetzten Systems (aus Schlauchträgereinheit 10 und Schlauch 8) beiträgt. Dadurch wird die Messgenauigkeit des Coriolis-Durchflussmessgerätes 2 erhöht. Beispielsweise kann der flexible Schlauch 8 aus einem flexiblen Kunststoffmaterial gebildet sein. Der Schlauch kann dabei durch ein stabiles, in die Schlauchwand eingesetztes Material (Netz, Spirale, etc.) verstärkt sein, so dass der Schlauch 8 auch in gebogenen und/oder eingeklemmten Bereichen einen weitgehend konstanten Innendurchmesser aufweist. Die Schlauchträgereinheit kann beispielsweise aus einem Metall oder einer Legierung gebildet sein.

Die Schlauchträgereinheit 10 ist vorliegend auch spiegelsymmetrisch relativ zu einer senkrecht zu der Symmetrieebene (xz-Ebene) und senkrecht zu der Schlaufenebene (xy-Ebene) verlaufenden Ebene (nachfolgend: yz-Ebene) ausgebildet. Wie anhand der Fig. 1 und 2 ersichtlich ist, ist auch der Schlauchverlauf eines in den Messwandler 4 eingesetzten, flexiblen Schlauches 8 im Wesentlichen spiegelsymmetrisch relativ zu dieser yz-Ebene ausgebildet. Lediglich im Bereich der Schlauchzuführung 12 und der Schlauchabführung 14 weicht der Schlauchverlauf von dem Schlauchverlauf im Bereich des Umkehrpunktes 16 ab. Durch eine entsprechende Fixierung der Schlauchträgereinheit 10 durch die beiden Fixierungen 18, 20 sowie gegebenenfalls des flexiblen Schlauches 8 durch die Schlauchfixierung 24 und die Spanneinheit 26 können die beiden (oberhalb und unterhalb der Symmetrieebene bzw. xz-Ebene ausgebildeten) Schwingungssysteme dennoch in Bezug auf das Schwingungsverhalten jeweils weitgehend symmetrisch relativ zu der yz-Ebene ausgebildet werden.

Innenseitig der Schlauchträgereinheit 10 sind ein (eigentlich aus zwei Teil-Erregern gebildeter) Erreger D und vier Schwingungs-Sensoren S₁, S₂, S₃ und S₄ angeordnet. Bei der vorliegenden Ausführungsform wird der Erreger D durch einen elektromechanischen Erreger gebildet. Der Erreger D ist zentral an der Querstrebe 22 fixiert und mit seinen beiden distalen Enden ist er mechanisch an entsprechende Bogenabschnitte der Schlauchträgereinheit 10 gekoppelt. Bei Anregung zu Schwingungen wird durch den Erreger D (bzw. durch dessen beide, sich jeweils zwischen der Querstrebe 22 und dem zugehörigen Bogenabschnitt erstreckende Teil-Erreger) wechselseitig der Abstand der zwischen den Fixierungen 18, 20 verlaufenden Bogenabschnitte der Schlauchträgereinheit 10 relativ zu der Querstrebe 22 vergrößert und verkleinert. Die beiden Schwingungssysteme führen dementsprechend Schwingungen, die zueinander spiegelsymmetrisch sind (relativ zu der Symmetrieebene bzw. xz-Ebene), aus. Die Schwingungen gehen jeweils mit einer wechselseitigen, elastischen Verformung der Schlauchträgereinheit 10, insbesondere der beiden, zwischen den Fixierungen 18, 20 verlaufenden Bogenabschnitte der Schlauchträgereinheit10, einher. Dies ist in den Fig. 1 und 2 schematisch durch die Darstellung von zwei Anregungszuständen dargestellt. Dabei ist in Fig. 1 die von dem Erreger D auf die beiden Bogenabschnitte ausgeübte Anregungskraft F_{exc} jeweils nach außen (d.h. von der Symmetrieebene weg) gerichtet, so dass der Abstand zwischen den beiden Bogenabschnitten vergrößert wird. In Fig. 2 ist die von dem Erreger D auf die beiden Bogenabschnitte ausgeübte Anregungskraft F_{exc} jeweils nach innen (d.h. zu der Symmetrieebene hin) gerichtet, so dass der Abstand zwischen den beiden Bogenabschnitten verkleinert wird.

Wie aus dem Fachgebiet bekannt ist, wirkt dann, wenn der flexible Schlauch 8 von einem Fluid durchströmt wird, aufgrund der Schwingung des Schlauches 8 jeweils eine Corioliskraft auf die bewegte Masse. Wird von einer Strömungsrichtung ausgegangen, wie sie in den Fig. 1 und 2 durch die Pfeile dargestellt ist, so wirkt bei dem in Fig. 1 dargestellten Anregungszustand (Vergrößerung des Abstandes zwischen den beiden Bogenabschnitten) bei dem stromaufwärts gelegenen Schwingungssystem (in den Fig. 1 und 2 oben dargestellt) im Bereich der ersten Fixierung 18 (und etwas stromabwärts derselben) die Corioliskraft F_{c} nach innen (d.h. zu der Schlauchträgereinheit 10 hin). Ferner wirkt bei dem stromaufwärts gelegenen Schwingungssystem im Bereich der zweiten Fixierung 20 (und etwas stromaufwärts derselben) die Corioliskraft F_{c} nach außen. Bei dem stromabwärts gelegenen Schwingungssystem (in den Fig. 1 und 2 unten dargestellt) wirkt im Bereich der zweiten Fixierung 20 (und etwas stromabwärts derselben) die Corioliskraft F_{c} nach innen, während sie im Bereich der ersten Fixierung 18 (und etwas stromaufwärts derselben) nach außen wirkt. Bei dem in Fig. 2 dargestellten Anregungszustand (Verkleinerung des Abstands zwischen den beiden Bogenabschnitten) wirkt die Coriliskraft F_{c} jeweils entgegengesetzt zu der Richtung, wie sie in Bezug auf den Anregungszustand der Fig. 1 erläutert wurde. Die Richtung der Corioliskraft F_{c} ist in Fig. 2 in den entsprechenden Bereichen dargestellt.

Jedem Schwingungssystem sind jeweils zwei Schwingungs-Sensoren zugeordnet. Diese sind jeweils beabstandet voneinander entlang dem zugehörigen Bogenabschnitt der Schlauchträgereinheit 10 angeordnet. Insbesondere sind dem stromaufwärtigen Schwingungssystem (in Fig. 1 und 2 oben dargestellt) die Schwingungs-Sensoren S₃ und S₄ zugeordnet, während dem stromabwärtigen Schwingungssystem (in Fig. 1 und 2 unten dargestellt) die Schwingungs-Sensoren S₁ und S₂ zugeordnet sind. Die Schwinguns-Sensoren jedes Schwingungssystems (S₃ und S₄ des stromaufwärtigen Schwingungssystems; S₁ und S₂ des stromabwärtigen Schwingungssystems) sind zueinander spiegelsymmetrisch in Bezug auf die yz-Ebene angeordnet. Durch jeden Schwingungs-Sensor S₁, S₂, S₃ und S₄ wird die Schwingung des jeweiligen Bogenabschnittes der Schlauchträgereinheit 10 relativ zu der Querstrebe 22 erfasst. Ferner sind die Schwingungs-Sensoren des einen Schwingungssystems (z.B. die Schwingungs-Sensoren S₃ und S₄ des stromaufwärtigen Schwingungssystems) spiegelsymmetrisch relativ zu der Symmetrieebene (xz-Ebene) zu entsprechenden Schwingungs-Sensoren des anderen Schwingungssystems (z.B. die Schwingungs-Sensoren S₂ und S₁ des stromabwärtigen Schwingungssystems) angeordnet. Die Schwingungs-Sensoren S₁, S₂, S₃ und S₄ werden bei der vorliegenden Ausführungsform jeweils durch elektromechanische Schwingungs-Sensoren gebildet, die jeweils mechanisch an die Schlauchträgereinheit 10 gekoppelt sind.

Wie anhand der vorangehenden Beschreibung deutlich wird, weist der Messwandler 4 zwei in Bezug auf ihr Schwingungsverhalten im Wesentlichen identische Schwingungssysteme (sowohl mit eingesetztem flexiblen Schlauch 8 als auch ohne eingesetztem Schlauch) auf. Auch bezüglich der Anregung und der Erfassung der Schwingungen der beiden Schwingungssysteme sind diese aufgrund der oberhalb beschriebenen Symmetrien identisch. Wird der flexible Schlauch von einem homogenen Fluid durchströmt, so entspricht die zwischen den Sensoren S₃ und S₄ erfasste Phasendifferenz der zwischen den Sensoren S₁ und S₂ erfassten Phasendifferenz der Schwingung. Diese beiden identischen Schwingungssysteme können eingesetzt werden, um zusätzliche Informationen in Bezug auf das in dem jeweils eingesetzten Schlauch geführte Fluid zu erhalten. Beispielsweise können durch den Messwandler, wie unterhalb anhand einer Ausführungsform erläutert wird, lokalisierte, in dem Fluid mitgeführte Verunreinigungen, wie beispielsweise in einer Flüssigkeit mitgeführte Gasblasen, Feststoffteile, etc., erfasst werden. Insbesondere können aufgrund solcher lokalisierten Verunreinigungen zunächst in dem stromaufwärtigen Schwingungssystem eine Verschiebung der erfassten Phasendifferenz und zeitverzögert hierzu in dem stromabwärtigen Schwingungssystem eine Verschiebung der erfassten Phasendifferenz auftreten.

Wie in dem Fachgebiet allgemein bekannt ist, erfolgt die Steuerung der Anregung durch den Erreger D sowie die Auswertung der von den Schwingungs-Sensoren S1, S2, S3 und S4 bereitgestellten Sensorsignale durch eine entsprechend ausgebildete Elektronik 6. Diese ist in den Fig. 1 und 2 lediglich schematisch durch eine Box dargestellt. Bei der vorliegenden Ausführungsform ist die Elektronik 6 zur Bestimmung des Massedurchflusses sowie zur Bestimmung der Dichte des strömenden Fluids ausgebildet.

In den Messwandler 4 können flexible Schläuche unterschiedlicher Schlauchstärken, unterschiedlicher Flexibilität sowie unterschiedlicher Schlauchdurchmesser eingesetzt werden. Die Elektronik 6 ist dabei vorzugsweise derart ausgebildet, dass nach Einsetzen eines flexiblen Schlauches in den Messwandler 4 zunächst eine Kalibrierung durchführbar ist. Die Kalibrierung kann dabei, je nach Ausbildung des Kalibrierungsverfahrens, bei einem bekannten Massedurchfluss, bei mit Fluid gefülltem Schlauch ohne Durchfluss oder vorzugsweise mit leerem Schlauch durchgeführt werden. Die bei der Kalibrierung bestimmten Parameter werden dann für die Durchflussmessung mit dem jeweiligen, flexiblen Schlauch eingesetzt.

Ferner ist die Elektronik 6 derart ausgebildet, dass durch diese im Einsatz des Coriolis-Durchflussmessgerätes 2 eine lokalisierte, in dem strömenden Fluid mitgeführte Verunreinigung detektierbar ist. Solch eine Verunreinigung kann beispielsweise eine in Flüssigkeit mitgeführte Gasblase oder ein in Flüssigkeit oder Gas mitgeführter Festkörper sein. Ist dieser Detektionsmechanismus aktiviert, so wird durch die Elektronik 6 überwacht, ob an einem der beiden Schwingungssysteme eine Anomalie mindestens eines an diesem Schwingungssystem erfassten Messsignals, wie beispielsweise des erfassten Massedurchflusses oder der erfassten Resonanzfrequenz, auftritt. Eine Anomalie ist dabei eine typische, durch eine Verunreinigung bei Passieren des Schwingungssystems ausgelöste Störung oder Abweichung des Messsignals. Vorzugsweise wird dabei nur das stromaufwärtige Schwingungssystem auf das Auftreten solch einer Anomalie überwacht (die Strömungsrichtung ist der Elektronik 6 in der Regel bekannt). Falls solch eine Anomalie in dem ersten Schwingungssystem detektiert wird, wird durch die Elektronik 6 überwacht, ob nach einem erwartungsgemäßen Zeitintervall in dem zweiten (stromabwärtigen) Schwingungssystem eine entsprechende Anomalie in mindestens einem, an dem zweiten Schwingungssystem erfassten Messsignal auftritt. Das erwartungsgemäße Zeitintervall wird bei der vorliegenden Ausführungsform in Abhängigkeit von dem, durch das Coriolis-Durchflussmessgerät 2 erfassten Massedurchfluss bestimmt. Falls auch in dem zweiten Schwingungssystem nach Ablauf des erwartungsgemäßen Zeitintervalls solch eine Anomalie detektiert wird, wird signalisiert, dass eine lokalisierte Verunreinigung das Coriolis-Durchflussmessgerät passiert hat. Diese Information kann in dem Coriolis-Durchflussmessgerät 2 oder durch eine übergeordnete Steuerungseinheit zur Korrektur des erfassten Massedurchflusses, der erfassten Dichte und/oder zur Auslösung eines Alarms genutzt werden.

In den Fig. 3 und 4 sind jeweils schematisch Querschnittansichten durch einen Arm einer Schlauchträgereinheit 10', 10" und durch einen um die Schlauchträgereinheit 10', 10" geführten, flexiblen Schlauch 8', 8" gemäß zwei verschiedenen Ausführungsformen dargestellt. Die Ebene des Querschnitts erstreckt sich jeweils senkrecht zu der Erstreckungsrichtung des jeweiligen Schlauches 8', 8" bzw. der Erstreckungsrichtung des jeweiligen Armes der Schlauchträgereinheit 10', 10". Die Schlauchträgereinheit 10, 10" wird bei diesen Ausführungsformen jeweils durch eine schienenartigen Träger gebildet. Dieser Träger kann beispielsweise oval, wie es in den Fig. 1 und 2 für die Schlauchträgereinheit 10 dargestellt ist, geformt sein. Bei beiden, in den Fig. 3 und 4 dargestellten Ausführungsformen weist die Schlauchträgereinheit 10' bzw. 10" eine entlang der schlaufenförmigen Außenkontur verlaufende Rinne 36 bzw. 38 zur Aufnahme eines flexiblen Schlauches 8' bzw. 8" auf.

Bei beiden Ausführungsformen der Fig. 3 und 4 entspricht die Rundung der Rinne 36 bzw. 38 im Wesentlichen der Rundung des Teils des Schlauches 8' bzw. 8", der auf der Rinne 36 bzw. 38 aufliegt. Bei der in Fig. 3 dargestellten Ausführungsform weist der Schlauch 8' einen ovalen Querschnitt auf, wobei der Schlauchteil mit dem größeren Krümmungsradius auf der Rinne 36 aufliegt. Eine solche Anordnung kann sich auch bei einem flexiblen Schlauch ergeben, der einen kreisförmigen Querschnitt aufweist, der aber aufgrund der Anlage auf der betreffenden Schlauchträgereinheit zu einem ovalen Querschnitt zusammengedrückt wird. Bei der in Fig. 4 dargestellten Ausführungsform weist der Schlauch 8" einen kreisförmigen Querschnitt auf.

## Patentansprüche

1. Messwandler vom Vibrationstyp für ein in einem, insb. zumindest anteilig aus einem flexiblem Kunststoff und/oder einem flexiblen Gewebe gebildeten, flexiblen Schlauch (8; 8'; 8") strömendes Fluid, aufweisend:
eine Schlauchträgereinheit (10; 10'; 10"), die zumindest abschnittsweise eine schlaufenförmige Außenkontur, um die ein flexibler Schlauch (8; 8'; 8") führbar ist, aufweist,
eine Spanneinheit (26), durch die ein im Einsatz um die schlaufenförmige Außenkontur geführter, flexibler Schlauch (8; 8'; 8") in Anlage an die schlaufenförmige Außenkontur spannbar ist,
mindestens einen an die Schlauchträgereinheit (10; 10'; 10") gekoppelten Erreger (D), durch den die Schlauchträgereinheit (10; 10'; 10") zu mechanischen Schwingungen, die mit einer wechselseitigen, elastischen Verformung der Schlauchträgereinheit (10; 10'; 10") einhergehen, anregbar ist,
und mindestens einen Schwingungs-Sensor (S₁, S₂, S₃, S₄), durch den mechanische Schwingungen der Schlauchträgereinheit (10; 10'; 10") und/oder eines im Einsatz in den Messwandler (4) eingesetzten, flexiblen Schlauches (8; 8'; 8") erfassbar sind.

2. Messwandler gemäß Anspruch 1, **dadurch gekennzeichnet, dass** die Schlauchträgereinheit (10; 10'; 10") und der Schlauchverlauf eines im Einsatz in den Messwandler eingesetzten, flexiblen Schlauches (8; 8'; 8") spiegelsymmetrisch in Bezug auf eine Symmetrieebene (xz-Ebene) verlaufen, wobei die Symmetrieebene (xz-Ebene) zwischen einer Schlauchzuführung (12) zu der Schlauchträgereinheit (10; 10'; 10") und einer Schlauchabführung (14) von der Schlauchträgereinheit (10; 10'; 10") verläuft, sich durch einen gegenüberliegend von der Schlauchzuführung (12) und Schlauchabführung (14) gelegenen Umkehrpunkt (16) der schlaufenförmigen Außenkontur erstreckt und senkrecht auf einer Schlaufenebene (xy-Ebene), die durch die Schlaufenform eines im Einsatz in den Messwandler (4) eingesetzten, flexiblen Schlauches (8; 8'; 8") festgelegt wird, steht.

3. Messwandler gemäß Anspruch 1 oder 2, **dadurch gekennzeichnet, dass** die Schlauchträgereinheit (10; 10'; 10") in einer Schlaufenebene (xy-Ebene), die durch die Schlaufenform eines im Einsatz in den Messwandler (4) eingesetzten flexiblen Schlauches (8; 8'; 8") festgelegt wird, eine geschlossene Form, insbesondere eine ovale Form, aufweist.

4. Messwandler gemäß einem der vorangehenden Ansprüche, **dadurch gekennzeichnet, dass** der mindestens eine Erreger (D) und/oder der mindestens eine Schwingungs-Sensor (S₁, S₂, S₃, S₄) innenseitig der Schlauchträgereinheit (10; 10'; 10") angeordnet ist/sind.

5. Messwandler gemäß einem der Ansprüche 2 bis 4, **dadurch gekennzeichnet, dass** die Schlauchträgereinheit (10; 10'; 10") durch eine auf der Symmetrieebene (xz-Ebene) angeordnete Fixierung (18) im Bereich der Schlauchzuführung (12) und der Schlauchabführung (14) sowie durch eine auf der Symmetrieebene (xz-Ebene) angeordnete Fixierung (20) im Bereich des Umkehrpunktes (16) in zwei zueinander spiegelsymmetrisch relativ zu der Symmetrieebene (xz-Ebene) angeordnete Schwingungssysteme unterteilt wird.

6. Messwandler gemäß Anspruch 5, **dadurch gekennzeichnet, dass** die beiden Schwingungssysteme durch den mindestens einen Erreger (D) durch wechselseitiges Vergrößern und Verkleinern des Abstandes der zwischen den Fixierungen (18, 20) jeweils verlaufenden Bogenabschnitte der Schlauchträgereinheit (10; 10'; 10") zu zueinander symmetrischen Schwingungen anregbar sind.

7. Messwandler gemäß Anspruch 5 oder 6, **dadurch gekennzeichnet, dass** jedem Schwingungssystem jeweils zwei Schwingungs-Sensoren (S₁, S₂ bzw. S₃, S₄) zugeordnet sind, die jeweils beabstandet voneinander entlang dem zugehörigen, zwischen den Fixierungen (18, 20) verlaufenden Bogenabschnitt der Schlauchträgereinheit (10; 10'; 10") angeordnet sind.

8. Messwandler gemäß einem der Ansprüche 5 bis 7, **dadurch gekennzeichnet, dass** die beiden Schwingungssysteme bezüglich der Anordnung der Schwingungs-Messpunkte des mindestens einen Schwingungs-Sensors (S₁, S₂, S₃, S₄) und der Erregungs-Punkte des mindestens einen Erregers (D) spiegelsymmetrisch zueinander relativ zu der Symmetrieebene (xz-Ebene) ausgebildet sind.

9. Messwandler gemäß einem der Ansprüche 5 bis 8, **dadurch gekennzeichnet, dass** die Schlauchträgereinheit (10; 10'; 10"), der vorbestimmte Verlauf eines im Einsatz in den Messwandler (4) eingesetzten flexiblen Schlauches (8; 8'; 8"), abgesehen von dem Bereich der Schlauchzuführung (12) und der Schlauchabführung (14) sowie dem Bereich des Umkehrpunktes (16), die Anordnung der Schwingungs-Messpunkte durch den mindestens einen Schwingungs-Sensor (S₁, S₂, S₃, S₄), und/oder die Anordnung der Erregungs-Punkte der Schlauchträgereinheit (10; 10'; 10") durch den mindestens einen Erreger (D) spiegelsymmetrisch relativ zu einer senkrecht zu der Symmetrieebene (xz-Ebene) und senkrecht zu der Schlaufenebene (xy-Ebene) verlaufenden Ebene (yz-Ebene) ausgebildet sind.

10. Messwandler gemäß einem der vorangehenden Ansprüche, **dadurch gekennzeichnet, dass** die Schlauchträgereinheit (10; 10'; 10") eine entlang der schlaufenförmigen Außenkontur verlaufende Rinne (36; 38) zur Aufnahme eines im Einsatz in den Messwandler (4) eingesetzten, flexiblen Schlauches (8; 8'; 8") aufweist.

11. Messwandler gemäß einem der vorangehenden Ansprüche, **dadurch gekennzeichnet, dass** die Schlauchträgereinheit (10; 10'; 10") eine deutlich höhere Biegesteifigkeit als der flexible Schlauch (8; 8'; 8") aufweist, insbesondere dass ein Verhältnis der Biegesteifigkeit der Schlauchträgereinheit (10; 10'; 10") entlang der schlaufenförmigen Außenkontur zu der Biegesteifigkeit des Schlauches (8; 8'; 8") entlang dessen Erstreckungsrichtung mindestens 10 ist.

12. Messwandler gemäß einem der vorangehenden Ansprüche, **dadurch gekennzeichnet, dass** die Spanneinheit (26) im Bereich der Schlauchzuführung (12) und der Schlauchabführung (14) beidseitig der Symmetrieebene (xz-Ebene) bewegbare Spannelemente (28, 30) aufweist, wobei durch Reduzieren des Abstands zwischen dem jeweiligen Spannelement (28; 30) und der Symmetrieebene (xz-Ebene) ein im Einsatz um die schlaufenförmige Außenkontur geführter flexibler Schlauch (8; 8'; 8") in Anlage an die schlaufenförmige Außenkontur spannbar ist und wobei die Spannelemente (28, 30) in mindestens einer Position mit reduziertem Abstand zu der Symmetrieebene (xz-Ebene) fixierbar sind.

13. Coriolis-Durchflussmessgerät für ein in einem flexiblen Schlauch (8; 8'; 8") strömendes Fluid, aufweisend:
einen Messwandler (4) gemäß einem der vorangehenden Ansprüche,
einen in den Messwandler (4) eingesetzten, insb. zumindest anteilig aus einem flexiblem Kunststoff und/oder einem flexiblen Gewebe gebildeten, flexiblen Schlauch (8; 8'; 8")
sowie eine Elektronik (6), durch die Messsignale des mindestens einen Schwingungs-Sensors (S₁, S₂, S₃, S₄) zur Bestimmung mindestens einer physikalischen Messgröße des strömenden Fluids auswertbar sind.

14. Coriolis-Durchflussmessgerät gemäß dem vorherigen Anspruch, **dadurch gekennzeichnet, dass** die Elektronik (6) derart ausgebildet ist, dass nach Einsetzen eines leeren, flexiblen Schlauches (8; 8'; 8") in den Messwandler (4) eine Nullpunkt-Kalibrierung für den spezifischen Schlauch (8; 8'; 8") durchführbar ist und die dabei bestimmten Parameter für eine nachfolgende Durchflussmessung von Fluid durch diesen Schlauch (8; 8'; 8") verwendbar sind.

15. Coriolis-Durchflussmessgerät gemäß Anspruch 14 oder 15 sowie zusätzlich gemäß Anspruch 5, **dadurch gekennzeichnet, dass** die Elektronik (6) derart ausgebildet ist, dass durch diese im Einsatz des Coriolis-Durchflussmessgerätes (2) mit in den Messwandler (4) eingesetzten, flexiblen, von Fluid durchströmten Schlauch (8; 8'; 8") zur Detektion einer lokalisierten, in dem strömenden Fluid mitgeführten Verunreinigung mindestens ein an einem ersten Schwingungssystem erfasstes Messsignal auf das Auftreten einer Anomalie überwachbar ist, falls solch eine Anomalie in dem ersten Schwingungssystem detektiert wird, überwachbar ist, ob nach einem erwartungsgemäßen Zeitintervall in dem zweiten Schwingungssystem eine entsprechende Anomalie in mindestens einem, an dem zweiten Schwingungssystem erfassten Messsignal auftritt, und, falls solch eine Anomalie in dem zweiten Schwingungssystem nach dem erwartungsgemäßen Zeitintervall detektiert wird, das Passieren von einer lokalisierten Verunreinigung signalisierbar ist.

## Claims

1. Vibronic transformer for a fluid flowing in a flexible hose (8, 8', 8") formed, in particular, at least partially from a flexible plastic and/or a flexible fabric, comprising:
a hose carrier unit (10, 10', 10") featuring, at least in sections, a loop-shaped outer contour around which a flexible hose (8, 8', 8") can be guided,
a clamping unit (26) via which a flexible hose (8, 8', 8"), guided around a loop-shaped outer contour during operation, can be clamped adjacent to the loop-shaped outer contour,
at least one exciter (D) coupled to the hose carrier unit (10, 10', 10"), via which the hose carrier unit (10, 10', 10") can be excited to mechanical vibrations which are accompanied by an alternating, elastic deformation of the hose carrier unit (10, 10', 10"),
and at least one vibration sensor (S₁, S₂, S₃, S₄), via which mechanical vibrations of the hose carrier unit (10, 10', 10") and/or of a flexible hose (8, 8', 8") inserted into the transformer (4) during operation can be recorded.

2. Transformer as claimed in Claim 1, **characterized in that** the hose carrier unit (10, 10', 10") and the hose run of a flexible hose (8, 8', 8") inserted into the transducer during operation are realized in mirror symmetry in relation to a plane of symmetry (xz plane), wherein the plane of symmetry (xz plane) runs between a hose feed (12) to the hose carrier unit (10, 10', 10") and a hose exit (14) from the hose carrier unit (10, 10', 10"), extends through a turning point (16) of the loop-like outer contour which is located opposite the hose feed (12) and hose exit (14) point and is perpendicular to a loop plane (xy plane) which is determined by the loop shape of a flexible hose (8, 8', 8") inserted into the transformer (4) during operation.

3. Transformer as claimed in Claim 1 or 2, **characterized in that** the hose carrier unit (10, 10', 10") has a closed shape, particularly an oval shape, in a loop plane (xy plane) which is determined by the loop shape of a flexible hose (8, 8', 8") inserted into the transformer (4) during operation.

4. Transformer as claimed in one of the previous claims, **characterized in that** the at least one exciter (D) and/or the at least one vibration sensor (S₁, S₂, S₃, S₄) is/are arranged inside the hose carrier unit (10, 10', 10").

5. Transformer as claimed in one of the Claims 2 to 4, **characterized in that** the hose carrier unit (10, 10', 10") is divided into two vibration systems arranged in mirror symmetry to one another with respect to the plane of symmetry (xz plane) by means of a fixing device (18) arranged on the plane of symmetry (xz plane) in the area of the hose feed (12) and the hose exit (14), and by means of a fixing device (20) arranged on the plane of symmetry (xz plane) in the area of the turning point (16).

6. Transformer as claimed in Claim 5, **characterized in that** the two vibration systems can be excited to vibrations that are symmetrical to one another by the at least one exciter (D) by alternately increasing and decreasing the spacing of the curve sections of the hose carrier unit (10, 10', 10") located between the fixing devices (18, 20).

7. Transformer as claimed in Claim 5 or 6, **characterized in that** each vibration system is assigned two vibration sensors (S₁, S₂ and S₃, S₄), which are arranged at a distance from one another along the associated curve section of the hose carrier unit (10, 10', 10") located between the fixing devices (18, 20).

8. Transformer as claimed in one of the Claims 5 to 7, **characterized in that**, in terms of the arrangement of the vibration measuring points of the at least one vibration sensor (S₁, S₂, S₃, S₄) and the arrangement of the excitation points of the at least one exciter (D), the two vibration systems are in mirror symmetry to one another in relation to the plane of symmetry (xz plane).

9. Transformer as claimed in one of the Claims 5 to 8, **characterized in that** the hose carrier unit (10, 10', 10"), the predefined course of a flexible hose (8, 8', 8") inserted into the transformer (4) during operation, with the exception of the area of the hose feed (12) and the hose exit (14) as well as the area of the turning point (16), the arrangement of the vibration measuring points by means of the at least one vibration sensor (S₁, S₂, S₃, S₄), and/or the arrangement of the excitation points of the hose carrier unit (10, 10', 10") by means of the at least one exciter (D) are formed with mirror symmetry in relation to a plane (yz plane) that runs perpendicular to the plane of symmetry (xz plane) and perpendicular to the loop plane (xy plane).

10. Transformer as claimed in one of the previous claims, **characterized in that** the hose carrier unit (10, 10', 10") has a channel (36, 38) extending along the loop-shaped outer contour designed to hold a flexible hose (8, 8', 8") inserted into the transformer (4) during operation.

11. Transformer as claimed in one of the previous claims, **characterized in that** the hose carrier unit (10, 10', 10") has a far higher flexural strength than the flexible hose (8, 8', 8"), particularly that a ratio of the flexural strength of the hose carrier unit (10, 10', 10") along the loop-shaped outer contour to the flexural strength of the hose (8, 8', 8") along its direction of extension is at least 10.

12. Transformer as claimed in one of the previous claims, **characterized in that** the clamping unit (26) in the area of the hose feed (12) and the hose exit (14) has movable clamping elements (28, 30) on both sides of the plane of symmetry (xz plane), wherein by reducing the spacing between the individual clamping element (28; 30) and the plane of symmetry (xz plane) a flexible hose (8, 8', 8") guided around the loop-shaped outer contour during operation can be clamped adjacent to the loop-shaped outer contour and wherein the clamping elements (28, 30) can be fixed in at least one position at a reduced distance relative to the plane of symmetry (xz plane).

13. Coriolis flowmeter for a fluid flowing in a flexible tube (8, 8', 8"), comprising:
a transformer (4) as claimed in one of the previous claims,
a flexible tube (8, 8', 8"), particularly a tube made at least partially from plastic material and/or a flexible fabric, inserted into the transformer (4),
as well as electronics (6) by means of which measuring signals of the at least one vibration sensor (S₁, S₂, S₃, S₄) can be evaluated to determine at least one physical measured variable of the flowing fluid.

14. Coriolis flowmeter as claimed in the previous claim, **characterized in that** the electronics (6) are designed in such a way that after inserting an empty, flexible hose (8, 8', 8") into the transformer (4), a zero point calibration can be carried out for the specific hose (8, 8', 8") and the parameters determined during the zero point calibration can be used for a subsequent measurement of the flow of fluid through this hose (8, 8', 8").

15. Coriolis flowmeter as claimed in Claim 14 or 15, and additionally as claimed in Claim 5, **characterized in that** the electronics (2) are designed in such a way that when the Coriolis flowmeter (6) is in service with a flexible hose (8, 8', 8") filled with fluid and inserted into the transformer said electronics can - for the purpose of detecting a localized contamination - be used to monitor at least one measuring signal, recorded at a first vibration system, for the occurrence of an anomaly transported in the flowing fluid, and if such an anomaly is detected in the first vibration system it is possible to monitor whether, after an expected interval, a corresponding anomaly occurs in the second vibration system in at least one measuring signal recorded at the second vibration system, and if such an anomaly is detected in the second vibration system after the expected interval it is possible to signal the occurrence of a localized contamination.

## Revendications

1. Transducteur du type à vibration pour un fluide circulant dans un tuyau flexible (8, 8', 8") constitué, notamment au moins partiellement, d'une matière plastique flexible et/ou d'un tissu flexible, comportant :
une unité support de tuyau (10, 10', 10"), qui présente au moins en partie un contour extérieur en forme de boucle, autour duquel peut être guidé un tuyau flexible (8, 8', 8"),
une unité de serrage (26), à travers laquelle le tuyau flexible (8, 8', 8"), guidé pendant sa mise en place autour du contour extérieur en forme de boucle, peut être serré en appui contre le contour extérieur en forme de boucle,
au moins un excitateur (D) couplé à l'unité support de tuyau (10, 10', 10"), à travers lequel l'unité support de tuyau (10, 10', 10") peut être excitée en vibrations mécaniques, qui s'accompagnent d'une déformation élastique alternée de l'unité support de tuyau (10, 10', 10"),
et au moins un capteur de vibrations (S₁, S₂, S₃, S₄), à travers lequel peuvent être mesurées les vibrations mécaniques de l'unité support de tuyau (10, 10', 10") et/ou d'un tuyau flexible (8, 8', 8") mis en place dans le transducteur (4).

2. Transducteur selon la revendication 1, **caractérisé en ce que** l'unité support de tuyau (10, 10', 10") et le tracé d'un tuyau flexible (8, 8', 8") mis en place dans le transducteur est réalisé selon une symétrie bilatérale par rapport à un plan de symétrie (plan xz), le plan de symétrie (plan xz) s'étendant entre une entrée de tuyau (12) allant vers l'unité support de tuyau (10, 10', 10") et une sortie de tuyau (14) venant de l'unité support de tuyau (10, 10', 10"), s'étendant à travers un point d'inversion (16) du contour extérieur en forme de boucle situé à l'opposé de l'entrée de tuyau (12) et de la sortie de tuyau (14) et étant perpendiculaire à un plan de boucle (plan xy), qui est déterminé par la forme de boucle du tuyau flexible (8, 8', 8") mis en place dans le transducteur (4).

3. Transducteur selon la revendication 1 ou 2, **caractérisé en ce que** l'unité support de tuyau (10, 10', 10") présente une forme fermée, notamment une forme ovale, dans un plan de tuyau (plan xy), qui est déterminé par la forme de boucle d'un tuyau flexible (8, 8', 8") mis en place dans le transducteur (4).

4. Transducteur selon l'une des revendications précédentes, **caractérisé en ce que** l'au moins un excitateur (D) et/ou l'au moins un capteur de vibrations (S₁, S₂, S₃, S₄) est/sont disposé(s) à l'intérieur de l'unité support de tuyau (10, 10', 10").

5. Transducteur selon la revendication 2 à 4, **caractérisé en ce que** l'unité support de tuyau (10, 10', 10") est divisée par une fixation (18) disposée sur le plan de symétrie (plan xz) dans la zone de l'entrée de tuyau (12) et de la sortie de tuyau (14), ainsi que par une fixation (20) disposée sur le plan de symétrie (plan xz) dans la zone du point d'inversion (16), en deux systèmes de vibrations disposés selon une symétrie bilatérale par rapport au plan de symétrie (plan xz).

6. Transducteur selon la revendication 5, **caractérisé en ce que** les deux systèmes de vibrations peuvent être excités en vibrations symétriques au moyen de l'au moins un excitateur (D) par une augmentation et une diminution alternées de la distance des sections coudées de l'unité support de tuyau (10, 10', 10"), situées entre les fixations (18, 20).

7. Transducteur selon la revendication 5 ou 6, **caractérisé en ce qu'**à chaque système de vibrations sont attribués respectivement deux capteurs de vibrations (S₁, S₂ et S₃, S₄), qui sont disposés à distance les uns des autres le long de la section coudée correspondante de l'unité support de tuyau (10, 10', 10") située entre les fixations (18, 20).

8. Transducteur selon la revendication 5 à 7, **caractérisé en ce que** les deux systèmes de vibrations sont formés selon une symétrie bilatérale par rapport au plan de symétrie (plan xz) en termes de disposition des points de mesure de vibration de l'au moins un capteur de vibrations (S₁, S₂, S₃, S₄) et des points d'excitation de l'au moins un excitateur (D).

9. Transducteur selon la revendication 5 à 8, **caractérisé en ce que** l'unité support de tuyau (10, 10', 10"), le tracé prédéfini d'un tuyau flexible (8, 8', 8") mis en place dans le transducteur (4), à l'exception de la zone de l'entrée de flexible (12) et de la sortie de flexible (14) ainsi que de la zone du point d'inversion (16), la disposition des points de mesure de vibration à travers l'au moins un capteur de vibrations (S₁, S₂, S₃, S₄), et/ou la disposition des points d'excitation de l'unité support de tuyau (10, 10', 10") à travers l'au moins un excitateur (D) sont formés selon une symétrie bilatérale par rapport à un plan (plan yz) perpendiculaire au plan de symétrie (plan xz) et perpendiculaire au plan de boucle (plan xy).

10. Transducteur selon l'une des revendications précédentes, **caractérisé en ce que** l'unité support de tuyau (10, 10', 10") présente un canal (36, 38) s'étendant le long du contour extérieur en forme de boucle destiné à la réception d'un tuyau flexible (8, 8', 8") mis en place dans le transducteur (4).

11. Transducteur selon l'une des revendications précédentes, **caractérisé en ce que** l'unité support de tuyau (10, 10', 10") présente une rigidité à la flexion nettement supérieure à celle du tuyau flexible (8, 8', 8"), notamment **en ce qu'**un rapport entre la rigidité à la flexion de l'unité support de tuyau (10, 10', 10") le long du contour extérieur en forme de boucle et la rigidité à la flexion du tuyau (8, 8', 8") le long de sa direction d'extension est d'au moins 10.

12. Transducteur selon l'une des revendications précédentes, **caractérisé en ce que** l'unité de serrage (26) dans la zone de l'entrée de tuyau (12) et de la sortie de tuyau (14) présente des deux côtés de l'axe de symétrie (plan xz) des éléments de serrage mobiles (28, 30), un tuyau flexible (8, 8', 8") guidé autour du contour extérieur en forme de boucle pouvant être serré, par la réduction de la distance entre l'élément de serrage (28, 30) respectif et le plan de symétrie (plan xz), en appui contre le contour extérieur en forme de boucle, et les éléments de serrage (28, 30) pouvant être fixés dans au moins une position à une distance réduite par rapport au plan de symétrie (plan xz).

13. Débitmètre Coriolis pour un fluide s'écoulant dans un tuyau flexible (8, 8', 8"), comportant :
un transducteur (4) selon l'une des revendications précédentes,
un tuyau flexible (8, 8', 8"), notamment constitué au moins partiellement d'une matière plastique flexible et/ou d'un tissu flexible, mis en oeuvre dans le transducteur (4),
ainsi qu'une électronique (6), par l'intermédiaire de laquelle les signaux de mesure de l'au moins un capteur de vibrations (S₁, S₂, S₃, S₄) peuvent être exploités en vue de la détermination d'au moins une grandeur de mesure physique du fluide en écoulement.

14. Débitmètre Coriolis selon la revendication précédente, **caractérisé en ce que** l'électronique (6) est conçue de telle sorte qu'après la mise en place d'un tuyau flexible (8, 8', 8") vide dans le transducteur (4), un étalonnage du zéro soit réalisable pour le tuyau (8, 8', 8") spécifique et que les paramètres déterminés à cette occasion puissent être utilisés pour une mesure de débit subséquente du fluide à travers ce tuyau (8, 8', 8").

15. Débitmètre Coriolis selon la revendication 14 ou 15, ainsi qu'additionnellement selon la revendication 5, **caractérisé en ce que** l'électronique (6) est conçue de telle sorte qu'à travers elle, lors de l'utilisation du débitmètre Coriolis (2) avec le tuyau flexible (8, 8', 8") parcouru par le fluide et mis en place dans le transducteur (4), au moins un signal de mesure acquis sur un premier système de vibrations puisse être surveillé par rapport à l'apparition d'une anomalie en vue de la détection d'une contamination localisée occasionnée par le fluide en écoulement, et au cas où une telle anomalie est détectée dans le premier système de vibrations, il soit possible de surveiller, si après un intervalle de temps prévisible dans le deuxième système de vibrations, une anomalie correspondante apparaît dans au moins un signal de mesure acquis sur le deuxième système de vibrations et, au cas où une telle anomalie est détectée dans le deuxième système de vibrations après l'intervalle de temps prévisible, l'apparition d'une contamination localisée puisse être signalée.
